# EUROPEAN PATENT APPLICATION

(11) **EP 4 446 629 A1**
(43) Date of publication of application: **16.10.2024**
(21) Application number: 22903608.2
(22) Date of filing: 09.12.2022
(51) Int. Cl.: F16K 11/074, F16K 31/04, F16K 31/53

(54) **FLOW PATH SWITCHING VALVE AND AIR CONDITIONER SYSTEM**

(30) Priority: 10.12.2021 CN 202123126059 U; 10.12.2021 CN 202123115214 U; 10.12.2021 CN 202111510648; 10.12.2021 CN 202123123646 U; 10.12.2021 CN 202123134684 U
(71) Applicant: Zhejiang Dunan Artificial Environment Co., Ltd., Shaoxing Zhejiang 311835 (CN)
(72) Inventor: XUAN, Yongbin, Shaoxing, Zhejiang 311835 (CN); JIN, Huahai, Shaoxing, Zhejiang 311835 (CN); ZHANG, Lian, Shaoxing, Zhejiang 311835 (CN); SHOU, Zhouyang, Shaoxing, Zhejiang 311835 (CN); TU, Liefeng, Shaoxing, Zhejiang 311835 (CN)
(74) Representative: Petraz, Gilberto Luigi
(86) International application number: PCT/CN2022/137978
(87) International publication number: WO 2023/104191

(57) **Abstract**

A flow path switching valve (100) and an air conditioner system (200) are provided. The flow path switching valve (100) includes a valve body (10) internally provided with a valve cavity (14). The valve body (10) is provided with a communication port (140) in communication with the valve cavity (14). The communication port (140) includes a first connecting port (11) and at least one switching path (13). The flow path switching valve (100) further includes a switching pipe (20). The switching pipe (20) includes a first end (21) and a second end (22). The first end (21) of the switching pipe (20) is rotatably connected to the valve body (10) and connected to the first connection port (11). The second end (22) of the switch pipe (20) is located in the valve cavity (14). The switching pipe (20) is capable of rotating to enable the second end (22) of the switching pipe (20) to be in communication with any one of the at least one switchable flow path (13).

## Description

### CROSS-REFERENCE TO RELATED APPLICATIONS

This application claims priority to Chinese patent application Nos. 202123126059.X, filed on December 10, 2021, and titled "FLOW PATH SWITCHING VALVE", 202123115214.8, filed on December 10, 2021, and titled "DIRECTIONAL VALVE AND CONDITIONING SYSTEM HAVING SAME", 202111510648.X, filed on December 10, 2021, and titled "SWITCHING VALVE AND REFRIGERATION SYSTEM HAVING SAME", 202123123646.3, filed on December 10, 2021, and titled "SWITCHING VALVE AND REFRIGERATION SYSTEM HAVING SAME", and 202123134684.9, filed on December 10, 2021, and titled "FLOW PATH SWITCHING DEVICE AND AIR CONDITIONER SYSTEM". The contents of the above identified applications are hereby incorporated herein in their entireties by reference.

### TECHNICAL FIELD

The present application relates to a field of valve technology, and in particular, to a flow path valve and an air conditioner system.

### BACKGROUND

In related technology, a pressure difference is used to drive most switching valves. A high pressure difference on high and low pressure sides of the valve body is required and the switching valve is then started for switching flow path during use. This results in requirements for the application environment and scenario, limiting application conditions of the product and having a small application scope.

### SUMMARY

According to various embodiments, a flow path switching valve and an air conditioner system are provided.

The present application provides a flow path switching valve. The flow path switching valve includes a valve body and a switching pipe. A valve cavity is defined in the valve body. A communication port in communication with the valve body is defined on the valve body. The communication port includes a first connection port and at least one switchable flow path. A switching pipe includes a first end and a second end. The first end of the switching pipe is rotatably connected to the valve body and connected to the first connection port. The second end of the switch is located in the valve cavity. The switching pipe is capable of rotating to enable the second end of the switching pipe to be in communication with any one of the at least one switchable flow path.

The present application provides an air conditioner system including the above flow path switching valve.

The details of one or more embodiments of this application are presented in following drawings and description below. The other features, purposes, and advantages of this application will become apparent from the description, drawings, and claims.

### BRIEF DESCRIPTION OF THE DRAWINGS

For a better description and illustration of embodiments and/or examples of those applications disclosed herein, reference may be made to one or more drawings. Additional details or examples used to describe the drawings should not be considered as limiting the scope of any of the disclosed applications, currently described embodiments and/or examples, and currently understood best modes of these applications.
FIG. 1 is a schematic diagram of a flow path switching valve of one or more embodiments.
FIG. 2 is a cross-sectional schematic diagram of the flow path switching valve in FIG. 1.
FIG. 3 is a schematic diagram of a flow path switching valve of one or more embodiments.
FIG. 4 is a cross-sectional schematic view of the flow path switching valve along A-A line in FIG. 3.
FIG. 5 is another view of the flow path switching valve in FIG. 3.
FIG. 6 is a cross-sectional schematic diagram of the flow path switching valve along B-B line in FIG. 5.
FIG. 7 is a schematic diagram of a driving mechanism of one or more embodiments.
FIG. 8 is a schematic diagram of a driving mechanism of one or more embodiments.
FIG. 9 is a schematic diagram of a driving mechanism of one or more embodiments.
FIG. 10 is a schematic diagram of a flow path switching valve of one or more embodiments.
FIG. 11 is a schematic diagram of a flow path switching valve in a first state of one or more embodiments.
FIG. 12 is a schematic diagram of a flow path switching valve in a second state of one or more embodiments.
FIG. 13 is a cross-sectional schematic diagram of a flow path switching valve of one or more embodiments.
FIG. 14 is a partial enlarged view of portion A in FIG. 13.
FIG. 15 is a front view of a flow path switching valve of one or more embodiments.
FIG. 16 is a cross-sectional schematic view at B to B in FIG. 15.
FIG. 17 is a schematic diagram of a flow path switching valve of one or more embodiments.
FIG. 18 is a schematic diagram of a flow path switching valve of one or more embodiments.
FIG. 19 is an explored diagram of a part of the flow path switching valve in FIG. 18.
FIG. 20 is a top view of the flow path switching valve in FIG. 18.
FIG. 21 is a cross-sectional schematic diagram of the flow path switching valve along A-A line in FIG. 20.
FIG. 22 is a cross-sectional schematic diagram of a connecting pipe assembly in the flow path switching valve of one or more embodiments.
FIG. 23 is a cross-sectional schematic diagram of a connecting pipe assembly in the flow path switching valve of one or more embodiments.
FIG. 24 is a schematic diagram of an air conditioner system of one or more embodiments.

Reference signs are as follows: 100 represents a flow path switching valve; 10 represents a valve body; 11 represents a first connection port; 12 represents a second connection port; 13 represents a switchable flow path; 13a represents a first switchable flow path; 13b represents a second switchable flow path; 14 represents a valve cavity; 140 represents a communication port; 142 represents a second passage; 15 represents a connecting hole; 16 represents an accommodating cavity; 17 represents a support platform; 18 represents a plane; 181 represents a first installing groove; 19 represents an accommodating groove; 121 represents a first connection pipe; 131 represents a second connection pipe; 141 represents a third connection pipe; 151 represents a forth connection pipe; 20 represents a switching pipe; 21 represents a first end; 22 represents a second end; 220 represents a rotatable portion; 23 represents an installing component; 24 represents a first passage; 25 represents an extension shaft; 30 represents an power amplifying mechanism; 31 represents a fitting component; 311 represents a first installing hole; 312 represents a first gear; 40 represents a driving mechanism; 41 represents a transmission component; 411 represents a second gear; 42 represent a transmission shaft; 43 represents a power component; 50 represents a first rotatable component; 60 represents a second rotatable component; 70 represents a first sealing component; 71 represents a first sealing groove; 80 represents a second sealing component; 81 represents a second sealing groove; 90 represents a connecting pipe assembly; 91 represents a connecting pipe; 911 represents a step; 92 represents a connector; 921 represents a groove; 93 represents a second installing groove; 94 represents a fastener; 95 represents a third sealing component; 200 represents an air conditioner system; 201 represents a compressor; 202 represents a first heat exchanger; and 203 represents a second heat exchanger.

### DETAILED DESCRIPTION

The technical solution in implementation method of this application is clearly and completely described in combination with drawings below. Obviously, the described implementation method is only a part of the implementation method of this application, not the entire implementation method. Based on the implementation methods in this application, all other implementation methods obtained by ordinary skill in the art without creative labor fall within scope of protection in this application.

It should be noted that when a component is referred to "install on" another component, it can be directly on another component or there can be a centered component. When a component is referred to "set to" another component, it can be directly on another component or there can be a centered component. When a component is referred to "fix on" another component, it can be directly on another component or there can be a centered component.

Unless otherwise defined, all technical and scientific terms used herein have same meaning as commonly understood by those skilled in the art of this application. The terms used in the specification of this application are only for the purpose of describing specific embodiments and are not intended to limit this application. In the present application, the term "or/and" includes any and all combinations of one or more related listed items.

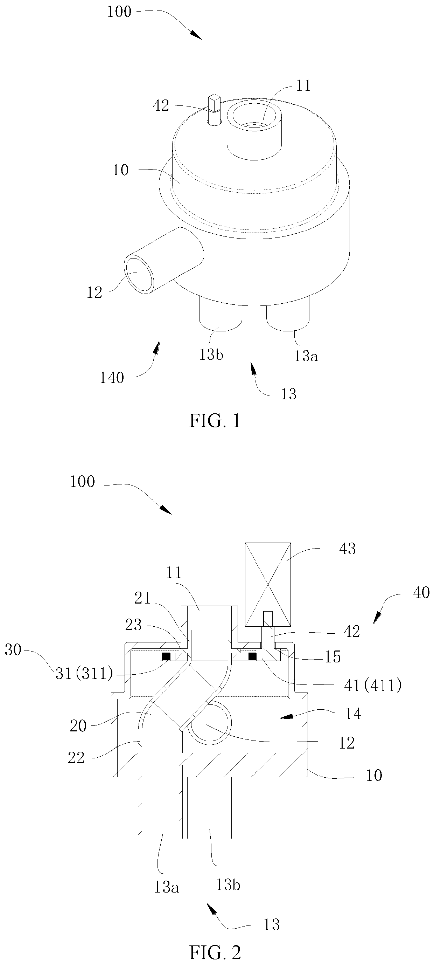

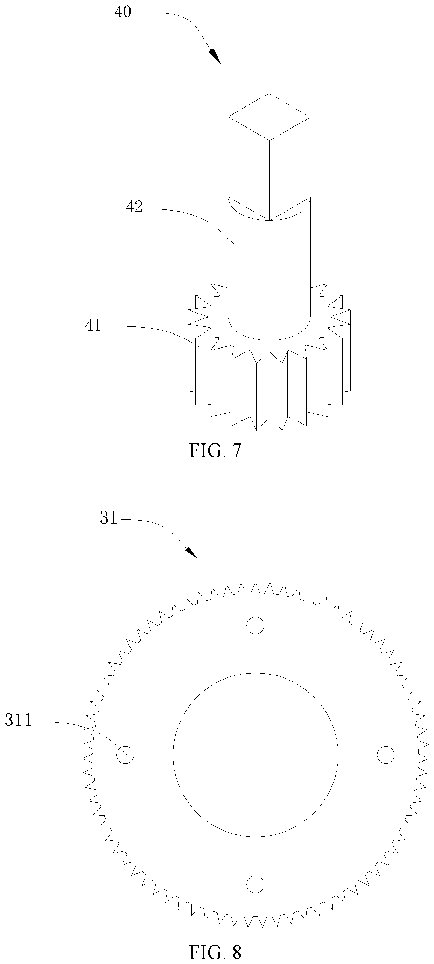

In one embodiment of the present application, a flow path switching valve 100 is provided. The flow path switching valve 100 is configured to switch a circulation relationship of a plurality of flow paths. Referring to FIGs. 1 to 9, the flow path switching valve 100 includes a valve body 10 and a switching pipe 20. In particular, a valve cavity 14 is internally provided in the valve body 10. A communication port 140 in communication with the valve cavity 14 is defined on the valve body 10. The communication ports 140 include a first connection port 11 and at least one switchable flow path 13. The switching pipe 20 includes a first end 21 and a second end 22. The first end 21 of the switching pipe 20 is rotatably connected to the valve body 10, and connected to and in communication with the first connection port 11. The second end 22 of the switching pipe 20 is located in the valve cavity 14.

In some embodiments, the communication ports 140 further includes a second connection port 12, and the flow path switching valve 100 further includes a power amplifying mechanism 30 and a driving mechanism 40. The power amplifying mechanism 30 is connected to the first end 21 of the switching pipe 20, and the driving mechanism 40 is configured for cooperation with the power amplifying mechanism 30 for transmission. The driving mechanism 40 is configured to drive the switching pipe 20 to rotate by the power amplifying mechanism 30. The second end 22 of the switching pipe 20 is capable of being connected to any one of the at least one switching flow path 13 during rotating of the switching pipe 20, thereby realizing to switch a flow path.

By a cooperated transmission of the power amplifying mechanism 30 and the driving mechanism 40, the driving mechanism 40 can applies a driving force to the power amplifying mechanism 30, thus the power amplifying mechanism 30 drives the switching pipe 20 connected to the power amplifying mechanism 30 to rotate, resulting in changing a communication relationship of the switching flow path 13 with the first connection port 11 and the second connection port 12. By such arrangement, a relative small force can drive the driving mechanism 40 and cause the switching pipe 20 to rotate. A structure of the flow path switching valve is simple, a drive method is simple, a pressure difference environment is not required, so as to eliminate a requirement for application environment and operating conditions of the flow path switching valve 100 and to expand application environment and scope of products.

In general, the flow path switching valve 100 is applied to a heat-exchange system of an air conditioner system. The heat-exchange system usually includes a compressor 201, an oil separator (not shown), and a first heat exchanger 202 and a second heat exchanger 203. The second heat exchanger 203 is an outdoor exchanger. In particular, the oil separator can separate oil droplets and gas refrigerant therein. Refrigerant separated from the oil separator can flow to the first heat exchanger 202 and the second heat exchanger 203 by the flow path switching valve 100. The oil droplets collected from the oil separator is back to the compressor 201 for supply oil. The oil separator is in communication with an exhaust port of the compressor 201. Oil droplets and gas refrigerant exhausted by the compressor 201 are separated from each other. Separated refrigerant flows to corresponding exchangers by a plurality of switchable flow paths 13, respectively.

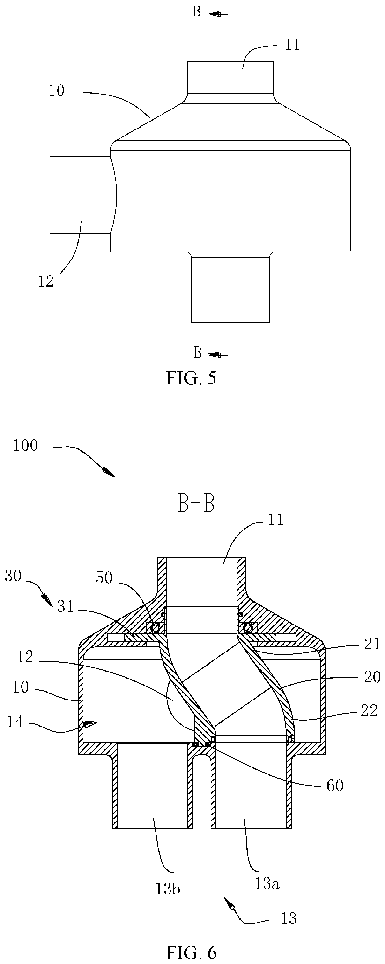

In particular, in some embodiments, referring to FIGs. 2 and 6, the number of the plurality of switchable flow paths 13 is set as two, which are denoted as a first switchable flow path 13a and a second switchable flow path 13b. In particular, the first connection port 11 is capable of being in communication with a suction port of the compressor 201. The second connection port 12 is capable of being in communication with an exhaust port of the compressor 201. The oil separator is provided in a path between the second connection port 12 and the exhaust port of the compressor 201. The first switchable flow path 13a is in communication with the first heat exchanger 202. The second switchable flow path 13b is in communication with the second heat exchanger 203. By rotating the switching pipe 20, a communication relationship of the compressor 201 with the first heat exchanger 202 and the second heat exchanger 203 can be adjusted. Alternatively, in other embodiments, a flow path switching valve 100 can be used in a heat-exchanger system of an air conditioner, and applied to application scenarios of requiring changing a flow relationship. In addition, in some embodiments, a first connection port 11 can be in communication with the exhaust port of a compressor 201, and a corresponding second connection port 12 can be in communication with the suction port of the compressor 201.

In particular, referring to FIGs. 1 and 2, along an axis direction of the valve body 10, the first connection port 11 is provided on a first end of the valve body 10. The first switchable flow path 13a and the second switchable flow path 13b are provided on a second end of the valve body 10. The second connection port 12 is defined on a side wall of the valve body 10. The first connection port 11 is provided relative to the first switchable flow path 13a or the second switchable flow path 13b. In some embodiments, locations of the first switchable flow path 13a and the second 13b are not limited herein, for example, the first switchable flow path 13a and the second switchable flow path 13b can be defined on the side wall of the valve body 10.

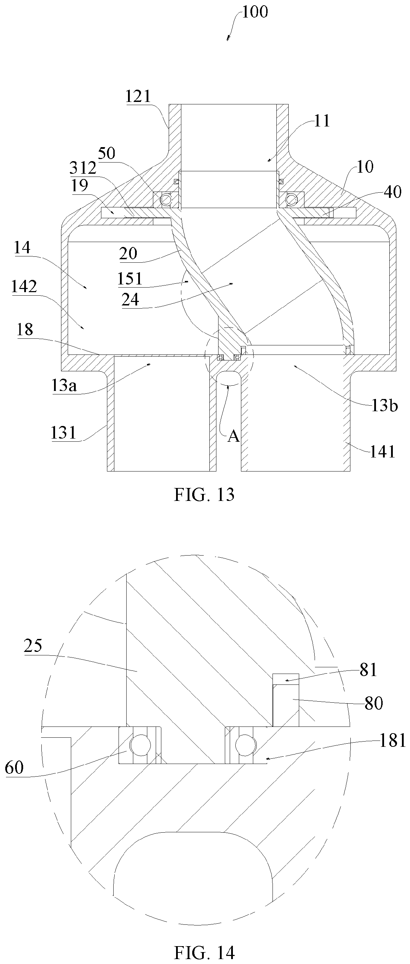

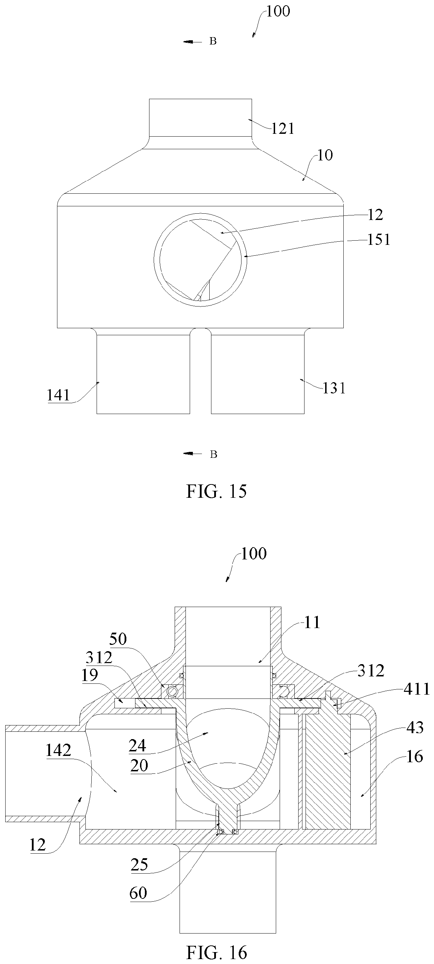

Referring to FIGs. 13, 15, and 17, the flow path switching valve 100 of the present application is installed in a cooling system and configured to realize to switch pipes.

In related technology of a flow path switching valve, taking four-way directional valve with large capacity as an example, a piston is provided in the valve body, a first connection port, a first switchable flow path, a second switchable flow path and a second connection port are provided around circumference of a valve body, the first connection port is in communication with an exhaust port of a compressor, and an second connection port is in communication with a suction of the compressor. When the first connection port is in communication with the first switchable flow path, the second switchable flow path is in communication with the second connection port, a first passage is defined between the first connection port and the first switchable flow path, a valve cavity is defined between the second switchable flow path and the second connection port, and the first passage is separated from the valve cavity by the piston. When it is required to switch, since there is a high pressure in the first passage and a low pressure in the valve cavity, the piston is required to overcome a pressure difference during switching of the piston, which increases a motion resistance of the piston, thereby leading to a switching failure and a jam of the piston.

In related technology of another four-way directional valve, for example, in a household four-way valve, a first connection port is defined on one side of the valve body; a first switchable flow path, a second switchable flow path and a second connection port are defined on the other side of the valve body. A piston can slide along a valve seat, a cavity body is defined in the piston and in communication with a suction port of a compressor, the first connection port is in communication with an exhaust of the compressor, a top end of the piston suffers from a relative great pressure, and the piston is in tight contact with the valve seat and slides along the valve seat due to a pressure difference during switching of the piston, thereby leading to a difficulty and a noisy during switching of the household four-way valve.

Referring to FIG. 13, the flow path switching valve 100 in the present embodiment is a four-way directional valve. The first connection port 11 is in communication with the exhaust port or the suction port of the compressor 201. The second connection port 12 is in communication with the suction port or the exhaust port of the compressor 201. The first switchable flow path 13a is in communication with a first heat exchanger 202. The second switchable flow path 13b is in communication with the second heat exchanger 203. When the first connection port 11 is in communication with the exhaust port of the compressor 201, the second connection port 12 is in communication with the suction port of the compressor 201. When the first connection port 11 is in communication with the exhaust of the compressor 201, the second connection port 12 is in communication with exhaust port of the compressor 201. In some embodiments, the flow path switching valve 100 can be a three-way valve or a five-way valve.

A first passage 24 is internally provided in the switching pipe 20. One end of the first passage 24 is in communication with the first connection port 11, and the other end of the first passage 24 is in communication with the first switchable flow path 13a or the second switchable flow path 13b. The valve cavity 14 includes a second passage 142, the second passage 142 is in communication with the second connection port 12 and the first switchable flow path 13a or the second switchable flow path 13b. The second passage 142 surrounds the first passage 24, i.e., the first passage 24 is internally provided in the second passage 142, and during the rotating of the switching pipe 20, the second end 22 of the switching pipe 20 is always in contact with an inner wall of the valve body 10. When the switching pipe 20 is in communication with the first switchable flow path 13a, the second passage 142 is in communication with the second switchable flow path 13b, and when the switching pipe 20 is in communication with the second switchable flow path 13b, the second passage 142 is in communication with the first switchable flow path 13a.

In the flow path switching valve 100, since the second passage 142 surrounds the first passage 24, circumferential pressure of the switching pipe 20 are consistent, and it does not generate a force inhibiting rotation and switch of the flow path switching valve 100 due to circumferential pressure of the switching pipe 20, such that the switching pipe 20 is merely required to overcome a friction between two ends of the switching pipe 20 and the inner wall of the valve body 10 to rotate and switch, thereby greatly reducing a motion resistance and leading to a smoother switching process. During the rotating of the switching pipe 20, an surface of an end of the switching pipe 20 away form first the connection port 11 is always in contact with inner wall of the valve body 10, so as to alleviate a problem of medium gas leakage between the first passage 24 and the second passage 142, thereby reducing an amount of gas leakage and improving an efficient of the air conditioner system 200 and work stability of the compressor 201.

During the rotating of the switching pipe 20, a rotation path of the switching pipe 20 is relative short, thereby realizing a fast switch. In addition, during rotating of the switching pipe 20, a rotating angel is not required to be great, so as to ensure that the switching pipe 20 is always in contact with the inner wall of the valve body 10. In addition, since pressure suffered from the inner wall of the first passage 24 along a circumference direction of the first passage 24 are consistent, a pressure difference between the first passage 24 and the second passage 142 does not lead to a pressure on two ends of the switching pipe 20, i.e., it does not compress the switching pipe 20 downwards, such that the second end 22 of the switching pipe 20 does not curl up, thereby improving a sealing performance between the first passage 24 and the second passage 142, while reducing a friction of a surface of the second end 22 of the switching pipe 20 when the surface of the second end 22 of the switching pipe 20 rotates.

In some embodiments, a bottom wall of inside of the valve body 10 is a plane 18. The first switchable flow path 13a and the second switchable flow path 13b are defined on the plane 18. The switching pipe 20 can move along the plane 18 during the rotating of the switching pipe 20, thereby ensuring that the first passage 24 is separated from the second passage 142 as far as possible.

In particular, a first connection pipe 121, a second connection pipe 131, a third connection pipe 141, and a forth connection pipe 151 are disposed on the first connection port 11, the first switchable flow path 13a, the second switchable flow path 13b and the second connection port 12, respectively. The first connection pipe 121, the second connection pipe 131, the third connection pipe 141 and the forth connection pipe 151 are in communication with the valve cavity 14 by the first connection port 11, the first switchable flow path 13a, the second switchable flow path 13b, and the second connection port 12, respectively. The first connection pipe 121, the second connection pipe 131, the third connection pipe 141, and the forth connection pipe 151 are configured to connect to pipes of the cooling system.

In the present application, the valve body 10 is made of aluminum alloy, weight thereof is light, sealing performance thereof is great, and strength thereof is high. The first connection pipe 121, the second connection pipe 131, the third connection pipe 141, and the forth connection pipe 151 are all made of copper pipes, which is conducive to welding with pipes of the cooling system.

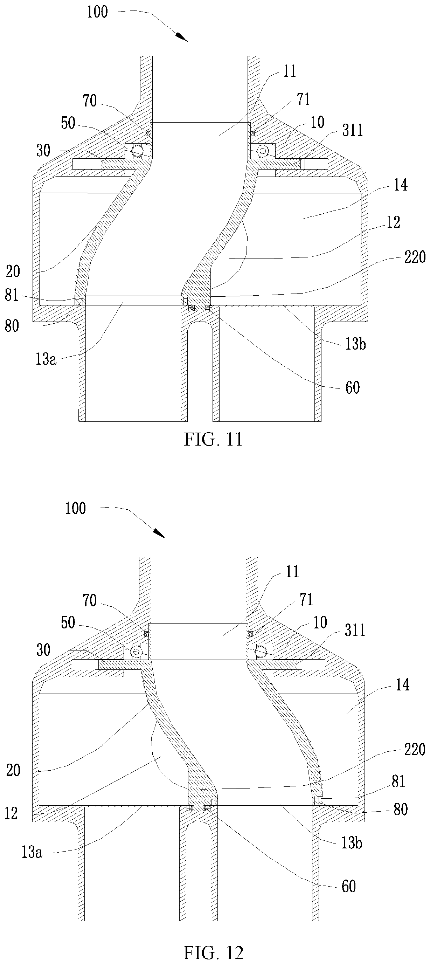

Referring to FIGs. 1, 2, 11 and 12, when the heat exchange system is in a cooling state, the switching pipe 20 is switched, such that the switching pipe 20 is in communication with the first switchable flow path 13a, the first connecting port 11 is in communication with the first switchable flow path 13a, the second connection port 12 is in communication with the second switchable flow path 13b by the valve cavity 14, such that the refrigerant flows to the first switchable flow path 13a, the switch pipe 20, the first connection port 11, the suction port of the compressor 201, the compressor 201, the exhaust port of the compressor 201, the oil separator, the second connection port 12, the valve cavity 14, the second switchable flow path 13b and the second heat exchanger 203 from the first heat exchanger 202. The first heat exchanger 202 is regarded as a condenser, and the second heat exchanger 203 is regarded as an evaporator.

When the heat exchange system is in a heating state, the switching pipe 20 rotates, the switching pipe 20 is in communication with the second switchable flow path 13b, such that the first connection port 11 is in communication with the second switchable flow path 13b, the second connection port 12 is in communication with the first switchable flow path 13a through the valve cavity 14, thereby, the refrigerant flows to the second switchable flow path 13b, the switching pipe 20, the first connection port 11, the suction port of the compressor 201, the compressor 201, the exhaust port of the compressor 201, the oil separator, the second connection port 12, the valve cavity 14, the first switchable flow path 13a and the first heat exchanger 202 from the second heat exchanger 203. The first heat exchanger is regarded as an evaporator, and the second heat exchanger is regarded as a condenser.

In other embodiments, the first switchable flow path 13a and the second switchable flow path 13b are interchangeable. In other words, the first second switchable flow path 13a can be regarded as the second switchable flow path 13b, and the second switchable flow path 13b can be regarded as the first switchable flow path 13a.

The flow path switching valve 100 can realize a directional switch between the cooling or heating state by rotating the switching pipe 20to switch between the first switchable flow path 13a and the second switchable flow path 13b. The rotation of the switching pipe 20 requires a driving force, and the drive mechanism 40 can adopt a drive motor. Alternatively, in other embodiments, the driving mechanism 40 can adopt other driving devices, which is not limited herein.

In one embodiment, referring to FIGs. 1 and 2 or FIGs. 3 to 6, the power amplifying mechanism 30 includes a fitting component 31. The fitting component 31 is connected to a first end 21 of the switching pipe 20. The driving mechanism 40 includes a transmission component 41. The transmission component 41 applies a transmission force to the fitting component 31 for cooperated transmission, so as to cause the switching pipe 20 to rotate. In particular, the transmission force consists of a circumference force and/or a radial force. Therefore, the switching pipe 20 does not suffer from an axis force, such that the switching pipe 20 does not generate a movement along an axis of the valve body 10 during a transmission process, a second end 22 of the switching pipe 20 is in tight contact with the first switchable flow path 13a or the second switchable flow path 13b, thereby preventing refrigerant from leaking.

In one embodiment, referring to FIGs. 1 to 8, a fitting component 31 is a first gear 312, a transmission component 41 is a second gear 411. The first gear 312 is engaged with and in transmission with the second gear 411. The first gear 312 is sleeved on the first end 21 of the switching pipe 20. By changing a transmission ratio between the first gear 312 and the second gear 411, a relative small driving force is capable of rotating the first gear 312 to cause the second gear 411 to rotate, resulting in the switching pipe 20 rotating. Therefore, a small driving force is required to realize a rotation of the switching pipe 20, a driving method thereof is simple, and there is no requirement for an application environment, it is not required to pay attention to a pressure difference of the application environment, thereby significantly improving an applicability and energy-saving performance of the flow path switching valve 100. Alternatively, in other embodiment, the fitting component 31 and the transmission component 41 can be a worm gear transmission and the fitting component 31 is a worm. Alternatively, the fitting component 31 and the transmission component 41 are a belt transmission or chain transmission. By a drive of the first gear 312, there is an occasion that the flow path switching valve 100 does not require to be driven by the pressure difference, thereby expanding an application fields.

In one embodiment, a first gear 312 and a second gear 411 are both gears. By engaging the first gear 312 and the second gear 411, to realize a transmission can be realized, resulting in reducing an overall size of the flow path switching valve 100. In other embodiments, a first gear 312 and a second gear 411 can also be pulleys, and a transmission between the first gear 312 and the second gear 411 is realized through belts.

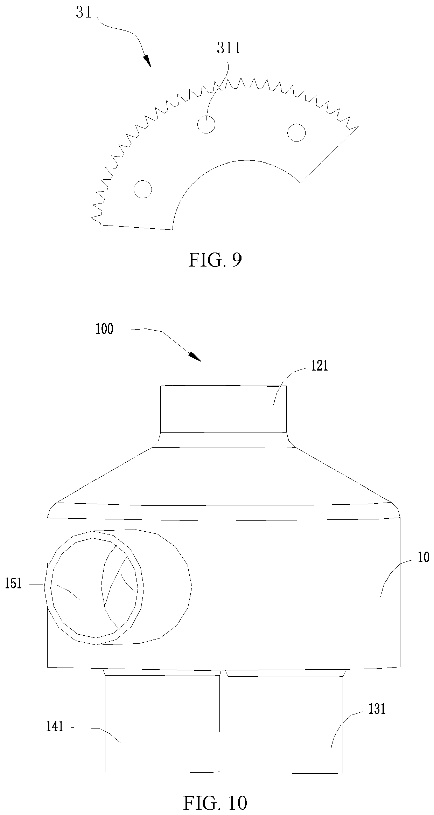

Alternatively, in another embodiment, referring to FIG. 9, a first gear 312 can be a segment gear. Therefore, an appropriate gear corresponding to a center angle is selected according to a requirement of a maximum angle of rotation of the switching pipe 20. For example, when an angle between a connecting line of a center of the first switchable flow path 13a a rotatable shaft of the switching pipe 20 and a connecting line of a center of the second switchable flow path 13b and a rotatable shaft of the switching pipe 20 is 60°, such that a maximum angle stroke required for the switching pipe 20 to rotate is 60°, a center angle corresponding to the segment gear is 60°, i.e., the rotatable maximum angle stroke of the segment gear is 60°. Therefore, an integral gear disc is not required, thereby reducing weight of the flow path switching valve 100, facilitating saving a cost and reducing a process amount.

The first gear 312 is fixed on the switching pipe 20, i.e., the first gear 312 can be fixed on the switching pipe 20 by welding, and the first gear 312 is integrally connected to the switching pipe 20, as long as rotating of the first gear 312 can cause the switching pipe 20 to rotate, which is not limited herein.

An accommodating groove 19 is defined in the valve body 10. The first gear 312 is disposed in the accommodating groove 19. A wall of the accommodating groove 19 is configured to support the first gear 312, so as to support the switching pipe 20. The first rotatable component 50 abuts against the first gear 312, and the first gear 312 is configured to support the first rotatable component 50.

The first gear 312 can be integrally connected to the switching pipe 20. Alternatively, the first gear 312 and the switching pipe 20 can be separate and then connected with each other by the welding.

Referring to FIGs. 2, 8 and 9, a first installing hole 311 is defined on a fitting component 31. An installing component 23 is provided on a first end 21 of the switching pipe 20. A second installing hole (not shown) is correspondingly defined on the installing component 23. The fitting component 31 is connected to the switching pipe 20 by fasteners 94 penetrating through the first installing hole 311 and the second installing hole. Therefore, it is conducive to detaching and replacing the fitting component 31. Alternatively, in other embodiments, a connection between the fitting component 31 and the switching pipe 20 is not limited as above description or in drawings. For example, the switching pipe 20 can be connected to the fitting component 31 by welding.

Referring to FIGs. 1 to 7, in one embodiment, a driving mechanism 40 further includes a transmission shaft 42 and a power component 43. One end pf the transmission shaft 42 is connected to a transmission component 41, and the other end of the transmission shaft 42 is connected to the power component 43. The power component 43 is configured to drive the transmission shaft 42 to rotate. The transmission shaft 42 is configured to drive the transmission component 41 to rotate. In particular, the power component 43 can be a drive motor or other driving mechanisms. The power component 43 can be a rotatable cylinder capable of rotating the second gear 411, and so on.

Referring to FIGs. 1 to 2, the power component 43 is provided outside of the valve body 10. A connecting hole 15 is defined on the valve body 10. The connecting hole 15 is corresponding to the transmission shaft 42. One end of the transmission shaft 42 extends out of the connecting hole 15 and is connected to the power component 43. By such arrangement, the power component 43 can be provided out of the flow path switching valve 100, i.e., the power component 43 can be externally connected to the transmission shaft 42, such that the power component 43 with different power can be replaced by different applications during an application, and a power of the power component 43 adapts operation conditions, thereby improving a work efficiency. In addition, the power component 43 is easily and conveniently detached and replaced after the power component 43 is damaged, thereby reducing a difficulty of a repair of the power component 43. The transmission shaft 42 is rotatably connected to the valve body 10 by a bearing or an axle sleeve, facilitating rotating the transmission shaft 42 and reducing a friction between the transmission shaft 42 and the valve body 10. The power component 43 can be fixedly installed outside of the valve body 10 and drive the transmission shaft 42 to rotate.

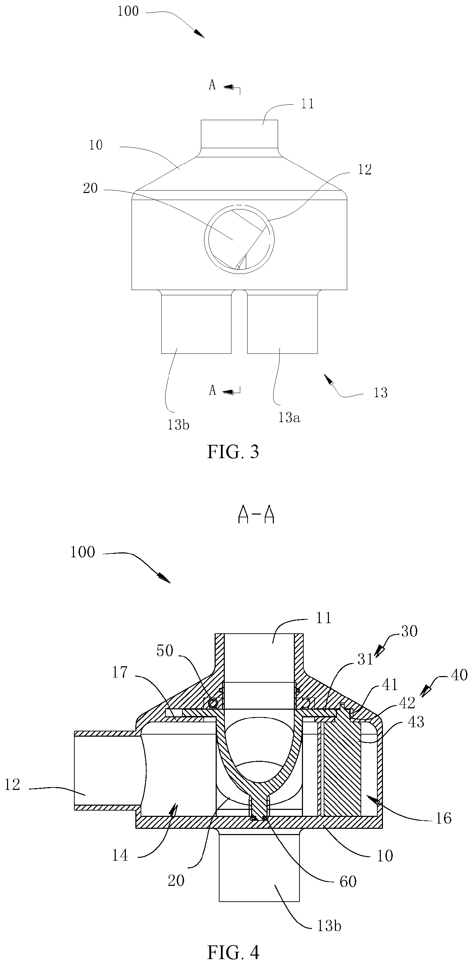

Alternatively, in other embodiments, a location of a power component 43 is not limited above description. For example, in another embodiment, referring to FIGs. 3 to 5, an accommodating cavity 16 is internally provided in a valve body 10, a power component 43 is provided in an accommodating cavity 16, and the accommodating cavity 16 is separated from the valve cavity 14. By the power component 43 providing in the accommodating cavity 16, the phenomenon that the power component 43 suffers from an erosion or damage can be prevented, thereby prolonging a service life of the power component 43. Meanwhile, the power component 43 is disposed in the accommodating cavity 16, the power component 43 does not suffer from an external application environment, thereby reducing a requirement of the application scenarios and the operation conditions, and facilitating an applicability of the flow path switching valve 100. An integration of the flow path switching valve 100 can be ensured, thereby preventing from messy components. Alternatively, in some embodiments, a power component 43 can disposed outside of the valve body 10 and facilitates repair of the power component 43.

Furthermore, referring to FIGs. 4 and 6, a support platform 17 is provided on a side wall of the valve body 10 and located at an end of the valve body 10 towards the first connection port 11. An power amplifying mechanism 30 is located on the support platform 17, such that the support platform 17 can support the power amplifying mechanism 30 and the switching pipe 20, the power amplifying mechanism 30 and the switching pipe 20 can be stably installed, thereby improving an installation stability, and in particular, the power amplifying mechanism 30 and the switching pipe 20 can be ensured to be stably installed in a condition of vibration, thereby improving a sealing performance between the switching pipe 20 and the switchable flow path 13.

Referring to FIGs. 10 to 12, the flow path switching valve 100 is a direction control valve having at least two flow forms and at least two connection ports. The direction control valve can realize a circulation, disconnection, and switch of the refrigerant and pressure unloading and sequential action control for a valve, which relies on a movement of a valve core relative to the valve body 10.

In related art, a piston of the flow path switching valve moves in a cylinder to realize a switching function, and an inner leakage control of the high and lower pressure sides can be realized by a high-precision interference fit between the piston and the valve body. Therefore, a process difficulty of this product is relative high. In addition, since the interference fit between the piston and valve body is extremely small, a connection of a product of a flow path switching valve and device thereof is mostly arc welding, there is a relatively application force during an assembly, which is prone for a valve body deformation and a lock piston, thereby the piston is not capable of moving smoothly to realize a switch.

In order to solve problems of flow path switching valves in related technology, in the present application, a flow path switching valve 100 is provided. The flow path switching valve 100 includes a valve body 10. A valve cavity 14 is defined in the valve body 10. A first connection port 11, a first switchable flow path 13a and a second switchable flow path 13b is in communication with the valve cavity 14. A switching pipe 20 is provided in the valve cavity 14. One end of the switching pipe 20 is connected to the first connection port 11, and the other end of the switching pipe 20 is in communication with either of a first switchable flow path 13a and a second switchable flow path 13b. The switching pipe 20 still abuts against an inner side of the valve body 10 during rotating of the switching pipe 20. A first sealing component 70 is provided between the first end 21 of the switching pipe 20 and the inner side of the valve body 10, and the first sealing component 70 abuts against an inner wall of the valve body 10 and the switching pipe 20; and/or, a second sealing component 80 is provided between the second end 22 of the switching pipe 20 and the inner wall of the valve body 10, and the second sealing component 80 abuts against the inner wall of the valve body 10 and the switching pipe 20.

In the present application, by the switching pipe 20 abutting against the inner wall of the valve body 10 during rotating of the switching pipe 20, in other words, when the switching pipe 20 is detached from one of the first switchable flow path 13a and the second switchable flow path 13b to the other of the first switchable flow path 13a and the second switchable flow path 13b, an end of the switching pipe 20 away from a first connection port 11 abuts against the inner wall of the valve body 10. When the switching pipe 20 is entirely detached from one of the first switchable flow path 13a and the second switchable flow path 13b, an end of the switching pipe 20 away from the first connection port 11 is capable of being entirely sealing by the inner wall of the valve body 10, so as to prevent high pressure and lower pressure leakage generated in the valve cavity 14 during rotating of the switching pipe 20. The first sealing component 70 is provided on an end of the switching pipe 20 towards the first connection port 11, the second sealing component 80 is provided on an end of the switching pipe 20 away from the first connection port 11, thereby preventing leakage at a connection position between the switching pipe 20 with the first connection port 11, the first switchable flow path 13a and the second switchable flow path 13b, thereby reducing a leakage possibility. Furthermore, the phenomenon that medium leaks from the switching pipe 20 to the valve cavity 14 or from the valve cavity 14 to the switching pipe 20 after a switch can be prevented, further alleviating a problem of high and low pressure leakage. In addition, a first sealing component 70 and a second sealing component 80 are provided to realize a seal, thereby reducing an accuracy requirement of the interference fit between the switching pipe 20 and the valve body 10 and process difficulty.

Referring to FIGs. 4 and 6, in one embodiment, the flow path switching valve 100 further includes a first rotatable component 50. The first rotatable component 50 is sleeved on the first end 21 of the switching pipe 20, and located between the switching pipe 20 and the wall of the valve cavity 14, such that the switching pipe 20 is rotatably connected to the valve body 10 by the first rotatable component 50, thereby reducing a friction between the wall of the valve cavity 14 and the switching pipe 20, such that the driving mechanism 40 is capable of rotating the switching pipe 20 to a position where the switching pipe 20 is connected to the switchable flow path 13. Moreover, a connection of the switching pipe 20 and the switchable flow path 13 is more accurate, and a connection dislocation is prevented. An inner ring of the first rotatable component 50 is connected to an outer sidewall of the switching pipe 20, and an outer ring of the first rotatable component 50 is connected to the inner wall of the valve body 10. In the present embodiment, the first rotatable component 50 selects an axle sleeve or a rolling bearing, improving connection strength between a rotatable pipe and the inner wall of the valve body 10 while reducing a friction of the switching pipe 20 during the rotating of the switching pipe 20.

Referring to FIGs. 4 and 6, the second end 22 of the switching pipe 20 is rotatably connected to the valve body 10, and two ends of the switching pipe 20 is rotatably connected to the valve body 10, such that two ends of the switching pipe 20 stably rotating is established during the rotating of the switching pipe 20, and the phenomena that the second end 22 of the switching pipe 20 is skewed and a rotation accuracy of the switching pipe 20 is influenced are prevented.

Optionally, referring to FIGs. 4, 6 and 12, the flow path switching valve 100 further includes a second rotatable component 60. The second end 22 of the switching pipe 20 is rotatably connected to the valve body 10 by the second rotatable component 60. The first rotatable component 50 and the second rotatable component 60 are in a same axis, such that the two ends of the switching pipe 20 do not reverse relative to each other during the rotating of the switching pipe 20. By arranging the second rotatable component 60, a friction of the wall of the valve cavity 14 and the switching pipe 20 can be reduced, a rotation accuracy of the switching pipe 20 is ensured, such that the driving mechanism 40 is capable of driving the switching pipe 20 to rotate to a position of switching pipe 20 connected to the switchable flow path 13.Moreover, a connection of the switching pipe 20 and the switchable flow path 13 are more accurate, and a connection dislocation is prevented.

Referring to FIG. 14, in some embodiments, an extension shaft 25 is provided at an end of the switching pipe 20 away from the first connection port 11. An end of the extension shaft 25 towards the first connection port 11 is fixedly connected to the switching pipe 20. The second rotatable component 60 is connected to an end of the extension shaft 25 away from the first connection port 11 and connected to the inner wall of the valve body 10, respectively. The extension shaft 25 is rotatably connected to the inner wall of the valve body 10 by the second rotatable component 60. The extension shaft 25 can rotate around the second rotatable component 60. During the rotating of the switching pipe 20, a connection portion of the switching pipe 20 and the extension shaft 25 does not move, a side of the switching pipe 20 away from the connection portion of the switching pipe 20rotates around the extension shaft 25 and moves to the first connecting port 11 or the second connecting port 12, which is conducive for switching the switching pipe 20 to position to a corresponding port.

In one embodiment, a second rotatable component 60 and a first rotatable component 50 are both rolling bearings. A first installing groove 181 is defined on a plane 18 and located between a first switchable flow path 13a and a second switchable flow path 13b. An end of the extension shaft 25 away from the first connection port 11 is connected inside of one of the rolling bearings. An outer sidewall of the rolling bearing is connected to a wall of the first installing groove 181. An end of the switching pipe 20 towards the first connection port 11 penetrates into the other of the rolling bearings and is connected to the inner wall of the rolling bearing, an outer wall of the other of the rolling bearings is connected to the inner wall of the valve body 10, and a friction during the rotating of the switching pipe 20 can be reduced by the second rotatable component 60 and the first rotatable component 50. In another embodiment, a second rotatable component 60 and a first rotatable component 50 can be axle sleeves. Alternatively, a second rotatable component 60 is a rolling bearing and a first rotatable component 50 is an axle sleeve. Alternatively, a second rotatable component 60 is an axle sleeve and a first rotatable component 50 is a rolling bearing.

In another embodiment, a driving mechanism 40 can provided at an end of a valve body 10 provided with a first installing groove 181. A power component 43 is fixedly installed on the valve body 10. An output shaft of the power component 43 is directly fixed on the extension shaft 25, and the power component 43 can rotate the extension shaft 25, so that the switching pipe 20 rotates the flow path switching valve 100 to switch. Alternatively, the driving mechanism 40 can rotate the extension shaft 25 by a motor engaging with the gear, which is not limited herein.

Referring to FIGs. 4 and 6, in one embodiment, a first rotatable component 50 and a second rotatable component 60 are bearings or axis sleeves, alternatively, which can be other components configured to support mechanical rotating bodies.

Furthermore, a rotatable portion 220 is provided at the second end 22 of the switching pipe 20. The rotatable portion 220 can be welded on the switching pipe 20 or integrally connected to the switching pipe 20. An end of the rotatable portion 220 away from the switching pipe 20 is connected to an inner wall of the valve body 10. The switching pipe 20 can rotate around the rotatable portion 220 to switch to be in communication with a first switchable flow path 13a and a second switchable flow path 13b. The rotatable portion 220 rotates around an axis of the rotatable portion 220, and the switching pipe 20 rotates around the rotatable portion 220 as a center. By arranging the rotatable portion 220 on the second end 22 of the switching pipe 20, the switching pipe 20 can rotate around the rotatable portion 220 to switch to be in communication with the first switchable flow path 13a or the second switchable flow path 13b.

In particular, to facilitate a rotation of the rotatable portion 220 and reducing a friction during the rotating of the rotatable portion 220, a second rotatable component 60 is provided on the rotatable portion 220. An inner ring of the second rotatable component 60 is sleeved on an outer wall of the rotation portion 220, and an outer ring of the second rotatable component 60 is connected to the inner wall of the valve body 10. In the present embodiment, the second rotatable component 60 adopts an axle sleeve or a rolling bearing, improving connection strength between the rotatable portion 220 and the valve body 10 while reducing a friction during the rotating of the rotatable portion 220.

Since a first end 21 of the switching pipe 20 is installed at the first connection port 11, a second end 22 of the switching pipe 20 is connected to the first switchable flow path 13a or the second switchable flow path 13b, the refrigerant is circulated by the switching pipe 20. Therefore, sealing performance at two ends of the switching pipe 20 is required, the phenomenon that the refrigerant leaks from connection portions of two ends of the switching pipe 20 or the refrigerant of the valve cavity 14 flows to the switching pipe 20 can be prevented, i.e., an inner leakage of the flow path switching valve 100 is required to prevent.

In one embodiment, a first sealing component 70 is disposed on a first end 21 of the switching pipe 20, and a second sealing component 80 is disposed on a second end 22 of the switching pipe 20. A first sealing groove 71 is defined on a pipe outer wall of the first end 21 of the switching pipe 20 and a second sealing groove 81 is defined on a pipe end wall of the second end 22 of the switching pipe 20. The first sealing component 70 and the second sealing component 80 are installed in the first sealing groove 71 and the second sealing groove 81, respectively, thereby preventing the first sealing component 70 and the second sealing component 80 from detaching from the switching pipe 20. Alternatively, the second sealing component 80 can be sleeved on the pipe outer wall of the second end 22 of the switching pipe 20 or the second sealing groove 81 is defined on that, and the second sealing component 80 is installed in the second sealing groove 81. It is required that the second sealing component 80 always abuts against the inner wall of the valve body 10.

Referring to FIG. 14, the second sealing component 80 abuts against a plane 18 and can improve a sealing performance between the first passage 24 and the second passage 142. When the switching pipe 20 does not rotate, the second sealing component 80 can seal the first passage 24 and the second passage 142 to prevent the inner leakage.

In one embodiment, a first end 21 of a switching pipe 20 is provided with a first sealing component 70, a second end 22 of the switching pipe 20 is provided with a second sealing component 80. A first sealing groove 71 is defined on an inner wall of a valve body 10 provided with a first connection port 11, and the first sealing component 70 is installed on the first sealing groove 71, thereby preventing the first sealing component 70 from detaching from the inner wall of the valve body 10. Alternatively, the inner wall of the valve body 10 outside of a first switchable flow path 13a and a second switchable flow path 13b are provided with second sealing grooves 81, respectively, so when the switching pipe 20 is in communication with the first switchable flow path 13a or the second switchable flow path 13b after completing switch of the switching pipe 20, the second sealing component 80 always abuts against an end of the switching pipe 20 away from the first connection port 11 and abuts against the inner wall of the valve body 10, thereby preventing an inner leakage.

The first sealing groove 71 and the second sealing groove 81 can be defined on the inner wall of the valve body 10 or on the switching pipe 20, which is required to be provided at a connection part where two ends of the switching pipe 20 is in contact with ports, as long as the phenomenon that refrigerant leaks from contact parts of two ends of the switching pipe 20 can be prevented, specific locations of the first sealing groove 71 and the second sealing groove 81 are not limited herein.

In the present application, the flow path switching valve 100 is provided. By the switching pipe 20 abutting against the inner wall of the valve body 10 during the rotating of the switching pipe 20, the phenomenon that the valve cavity 14 generates a high or low pressure leakage can be avoided. By arranging a first sealing component 70 on an end of the switching pipe 20 towards the first connection port 11 and the second sealing component 80 on an end of the switching pipe 20 away from the first connection port 11, leakage of connection portions between the switching pipe 20 with the first connection port 11, the first switchable flow path 13a and the second switchable flow path 13b can be avoided, thereby reducing a leakage ratio.

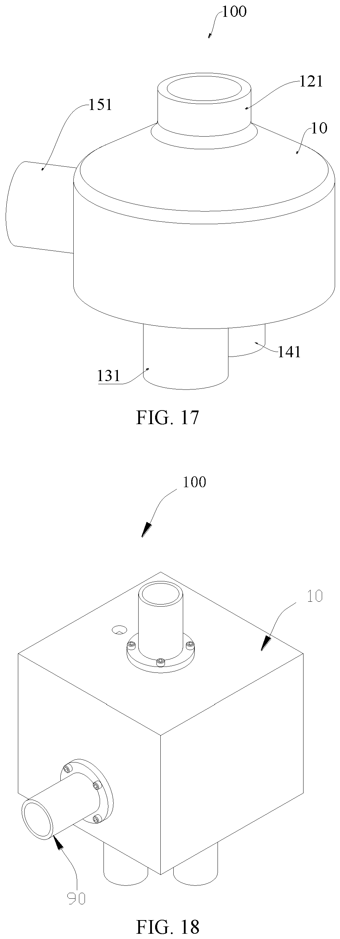

Referring to FIGs. 18 to 21, the flow path switching valve 100 further includes a plurality of connecting pipe assemblies 90. Ends of the plurality of the connecting pipe assembly 90 are detachably connected to the first connection port 11, the first switchable flow path 13a and the second switchable flow path 13b, respectively.

In the present application, there are the plurality of connecting pipe assemblies 90 detachably connected to communication ports, respectively. In one hand, it is conducive for the valve body 10 to be connected to the air pipe by the plurality of connecting pipe assemblies 90. The connecting pipe assemblies 90 can be made of a material that is conducive to connecting the air conditioner pipeline according to a material of the air conditioner pipeline. For example, if the air conditioner pipeline is a copper or steel structure, the connecting pipe assembly 90 can be made of a steel or copper material, facilitating an assembly of the valve body 10 and the air conditioner pipeline.

In the other hand, it is conducive to installing, detaching and replacing the connecting pipe assembly 90, when the connecting pipe assembly 90 suffers wear and tear during a long term use, the connecting pipe assembly 90 can be detached from the valve body 10, so as to maintain, replace or repair the connecting pipe assembly 90, and the overall valve body 10 is not required to replace, thereby significantly reducing a cost, time, and labor.

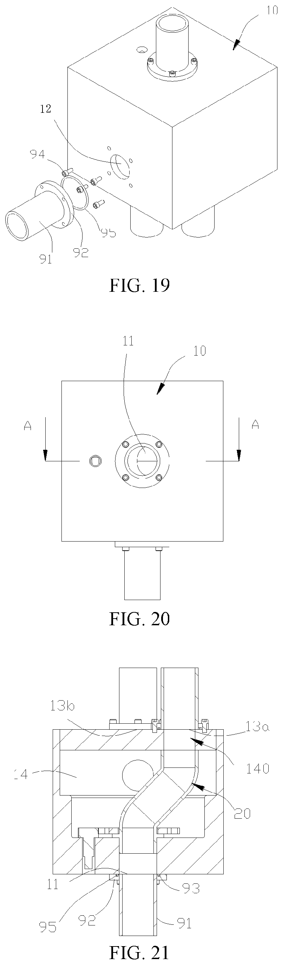

Referring to FIG. 19, the flow path switching valve 100 further includes fasteners 94. The plurality of connecting pipe assemblies 90 include connecting pipes 91 and connectors 92. Connecting pipes 91 are configured to be in communication with the communication port 140. Connectors 92 are located out of and connected to the connecting pipes 91. In particular, the fasteners 94 penetrate through the connectors 92, and are configured to connect the connectors 92 with the valve body 10 and install the connecting pipe 91 on the valve body 10.

By arranging the connectors 92, the connectors 92 are located outside of the connecting pipes 91 and connected to the connecting pipes 91. The connectors 92 are installed on the valve body 10 by the fasteners 94, thereby realizing to install the connecting pipes 91 on the valve body 10. A structure of the connectors 92 is simple, facilitating an installation, detachment, repair and replacement of the connecting pipes 91.

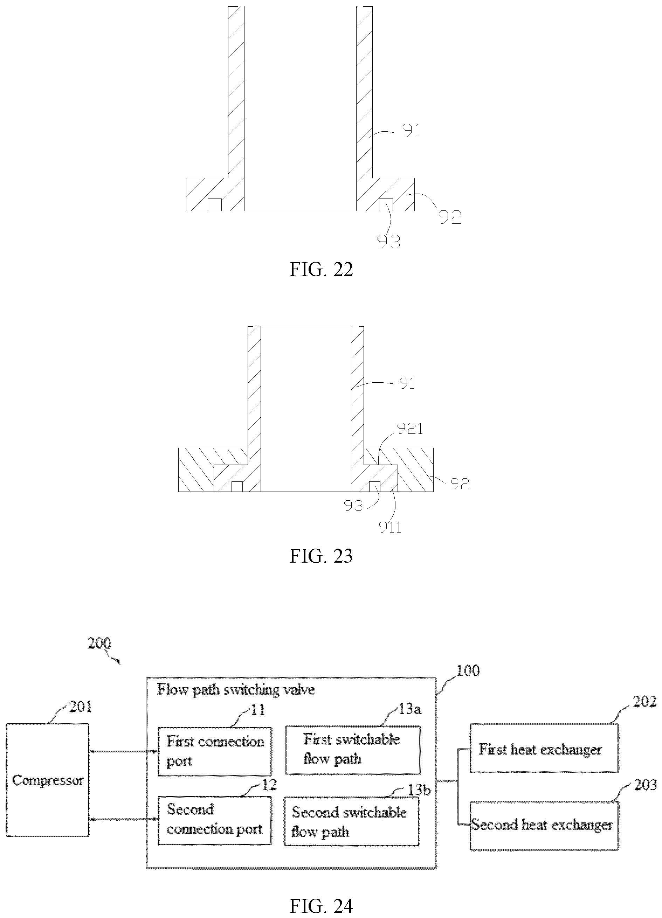

Referring to FIGs. 19 and 22, a plurality of second installing grooves 93 are defined on an end of the plurality of connecting pipe assemblies 90 towards the valve body 10. The flow path switching valve 100 further includes a plurality of third sealing components 95 installed in the second installing grooves 93. In particular, by locking the connecting pipe assembly 90 on the valve body 10 via the fasteners 94, the third sealing component 95 is capable of being tightly compressed on the communication port 140. Therefore, a sealing performance of the overall structure can be improved, and the third sealing components 95 can seal each of communication ports 140, thereby preventing from a leakage.

### Embodiment 1

Referring to FIG. 22, in the present application, connecting pipes 91 and connectors 92 are an integral structure. Therefore, it is conducive to processing and installing. The connectors 92 are installed on the valve body 10 by the fasteners 94, which is capable of realizing an installation of the connecting pipe 91 and the valve body 10.

Furthermore, the second installing groove 93 is defined on a side surface of the connecting pipe 92 towards the valve body 10. In particular, the connectors 92 are locked on the valve body 10 by the fasteners 94, and the third sealing components 95 are tightly compressed on the communication port 140. Therefore, a sealing performance of the valve body 10 can be improved, preventing from a leakage.

### Embodiment 2

Referring to FIG. 23, in the present embodiment, connecting pipes 91 and connectors 92 are detachable structures. The second installing groove 93 is defined on a side face of one of the connecting pipes 91 towards the valve body 10. In particular, the connectors 92 are locked on the valve body 10 by the fastener 94, and the third sealing components 95 can be tightly compressed on the communication port 140. Therefore, a sealing performance of the valve body 10 can be improved, preventing from a leakage.

Furthermore, the connectors 92 are provided with grooves 921. The connecting pipes 91 include steps 911, the steps 911 are located on an end of one of the connecting pipes 91 towards the valve body 10, and the second installing grooves 93 are defined on a side surface of the steps 911 towards the valve body 10. In particular, by sleeving the connector 92 out of the connecting pipes 91, the grooves 921 can abut against the steps 911.

Therefore, the connecting pipes 91 are provided with the steps 911 and the connectors 92 are provided with grooves 921, which is conducive for an installation between the connecting pipes 91 and the connectors 92. The steps 911 can restrict a portion of the connectors 92 installing on the connecting pipes 91, enabling a fast installation between the connector 92 and the connecting pipe 91, saving a time and facilitating an installation. A combination of the connecting pipes 91 and the connectors 92 can be adaptively adopted, improving a diversity of the plurality of connecting pipe assemblies 90.

### Embodiment 3

In the present embodiment, a connecting pipe 91 is welded to a connector 92. A surface of an end of the connecting pipe 91 towards a valve body 10 can be weld to a surface of an end of the connector 92 away from the valve body 10, or an outside surface of the connecting pipe 91 towards the valve body 10 is welded to an inside surface of the connector 92.

Furthermore, a second installing groove 93 is provided on a side surface of the connector 92 towards the valve body 10. In particular, the connector 92 is locked on the valve body 10 by a fastener 94, and a third sealing component 95 is tightly compressed on a communication port 140. Therefore, a sealing performance of the valve body 10 can be improved, thereby preventing from a leakage.

In the present application, the connecting pipe 91 is made of a copper or steel material.

Considering weight of the overall valve body 10, the valve body 10 is usually made of aluminum alloy material having low density and good strength. However, an air conditioner pipeline is usually made of a copper or steel pipe, it is difficult to directly weld an valve body 10 made of the aluminum alloy with the copper or steel pipe, a melting point of the aluminum alloy material has a significant difference with that of the copper and steel material, and the aluminum alloy is prone to oxidation and a process of processing that is relative difficult. Therefore, it is difficult to connect the valve body 10 made of the aluminum alloy to the air conditioner pipeline.

In particular, the connecting pipes 91 can be made of copper, brass, or steel. The connecting pipe 91 can be made of an appropriate material according to the material of the air conditioner pipeline. When the air conditioner pipeline is made of copper, the connecting pipe 91 can be a connecting pipe made of copper or brass, which is conducive to connecting the valve body 10 with the air conditioner pipeline. When the air conditioner pipeline is a steel pipe, the connecting pipe 91 can be a connecting pipe made of steel, which is conducive to connecting the valve body 10 with the air conditioner pipeline. A technology difficulty of welding the air conditioner system with the valve body 10 is significantly reduced, facilitating connection and assembly. Meanwhile, a connecting pipe assembly 90 can be detachably connected to the valve body 10, which is conducive to replacing, maintaining and detaching the connecting pipes 91.

Alternatively, the connecting pipes 91 can be made of other materials, as long as it is convenient to connect to the air conditioner pipeline.

Optionally, a material of the connector 92 and the fastener 94 is aluminum alloy. The aluminum alloy material can reduce a cost and weight and improve a lightness of the overall structure.

In the present application, the fastener 94 can be a bolt or screw, but it is not limited above components, as long as it can be any component capable of achieving a same or similar effect.

The connectors 92 can be a flange, alternatively, in other embodiments, the connectors 92 can be other components as long as they can achieve a same or similar effect with the flange.

In the present application, the plurality of connecting pipe assemblies 90 are detachable, and the connecting pipes 91 are made of a copper or steel material. It is conducive to connecting to the air conditioner pipeline and adopting the connecting pipe with an appropriate material according to a material of the air conditioner pipeline, thereby reducing a technology difficulty. In addition, it is conducive to installing, detaching, maintaining and replacing.

Referring to FIG. 24, an air condition system 200 is further provided in the present application. The air conditioner system 200 includes a compressor 201, a first heat exchanger 202, a second heat exchanger 203 and a flow path switching valve 100, in which the first connection port 11 and the second connection port 12 are in communication with a suction port or exhaust port of the compressor 201, respectively. The first switchable flow path 13a and the second switchable flow path 13b are in communication with the first heat exchanger 202 and the second heat exchanger203, respectively. The air conditioner system 200 has same advantages with the flow path switching valve 100.

The first connection pipe 121 of the flow path switching valve 100 is connected to the suction port or exhaust port of the compressor 201, the second connection pipe 131 is connected to the first heat exchanger 202, the third connection pipe 141 is connected to the second heat exchanger 203, and the forth connection pipe 151 is connected to the suction port or exhaust port of the compressor 201.

When the air conditioner system 200 is in the cooling mode or defrosting mode, the switching pipe 20 rotates to the first switchable flow path 13a, the first passage 24 is in communication with the first connection port 11 and the first heat exchanger 202; and the second passage 142 is in communication with the second connection port 12 and the second switchable flow path 13b. When the first connection pipe 121 is connected to the suction port of the compressor 201, the forth connection pipe 151 is connected to the exhaust port of the compressor 201, the first heat exchanger 202 is regarded as an evaporator, the second heat exchanger 203 is regarded as a condenser, a medium along a first way enters from the first switchable flow path 13a to the first passage 24 and flows from the first connection port 11 to the suction port of the compressor 201, and a medium along a second way enters from the second connection port 12 to the second passage 142 and flows from the second switchable flow path 13b to the second heat exchanger 203. When the first connection pipe 121 is connected to the exhaust port of the compressor 201, the forth connection pipe 151 is connected to the suction port of the compressor 201, the first heat exchanger 202 is regarded as the condenser, the second heat exchanger 203 is regarded as the evaporator, the medium along the first way enters from the first connection port 11 to the first passage 24 and flows from the first switchable flow path 13a to the first heat exchanger 202, and the medium along the second way enters from the second switchable flow path 13b to the second passage 142 and flows from the second connection port 12 to the compressor 201.

When the air conditioner system 200 is in the heating mode, the switching pipe 20 rotates to the second switchable flow path 13b, the first passage 24 is in communication with the first connection port 11 and the second heat exchanger 203, and the second passage 142 is in communication with the second connection port 12 and the first switchable flow path 13a. When the first connection pipe 121 is connected to the suction port of the compressor 201, the forth connection pipe 151 is connected to the exhaust port of the compressor 201, the first heat exchanger 202 is regarded as the condenser, the second heat exchanger 203 is regarded as the evaporator, the medium along the first way enters from the second switchable flow path 13b to the first passage 24 and flows from the first switchable flow path 13a to the first heat exchanger 202. When the first connection pipe 121 is connected to the exhaust port of the compressor 201, the forth connection pipe 151 is connected to the suction port of the compressor 201, the first heat exchanger 202 is regarded as the evaporator, the second heat exchanger 203 is regarded as the condenser, the medium of the first way enters from the first connection port 11 to the first passage 24 and flows from the second switchable flow path 13b to the second heat exchanger 203, and the medium along the second way enters from the first switchable flow path 13a to the first passage 24 and flows from the second connection port 12 to the compressor 201.

During work, when the air conditioner system 200 is in the cooling mode, the medium of the first way enters to the second passage 142, and the medium of the second way enters to the first passage 24. When it is required to switch to the heating mode, the power component 43 rotates the first gear 312 to cause the switching pipe 20 to rotate, the switching pipe 20 is in contact with the inner wall of the valve body 10 and rotates to the second switchable flow path 13b, such that the first passage 24 is in communication with the first switchable flow path 13a, thereby realizing a switch. During switching of the switching pipe 20, an surface of an end of the switching pipe 20 is in contact with the inner wall of the valve body 10, thereby alleviating a leakage between the first passage 24 and the second passage 142, in additional, a medium in the second passage 142 surrounds circumference of the switching pipe 20, the switching pipe 20 suffers from consistent force along a circumference direction, thereby reducing a resistance for the switching pipe 20 during the rotating of the switching pipe 20.

In addition, it should be noted that terms "first" and "second" used to define components is only for the purpose of distinguishing the corresponding components. Unless otherwise stated, the above words have no special meaning and cannot be understood as limiting the scope of protection of this application.

The various technical features of the above embodiments can be combined in any way. To make the description concise, all possible combinations of the various technical features in the above embodiments have not been described. However, as long as there is no contradiction in the combination of these technical features, they should be considered within the scope of this specification.

Ordinary skill in the art should recognize that the above embodiments are only used to illustrate the present application, and not as a limitation on the present application. As long as they fall within the substantive and spiritual scope of the present application, appropriate changes and variations made to the above implementation methods fall within the scope of protection required by the present application.

## Claims

1. A flow path switching valve, **characterized by** comprising:
a valve body internally provided with a valve cavity, wherein the valve body is provided with a communication port in communication with the valve cavity, the communication port comprises a first connection port and at least one switchable flow path;
a switching pipe comprising a first end and a second end, wherein the first end of the switching pipe is rotatably connected to the valve body and connected to the first connection port, the second end of the switch pipe is located in the valve cavity; and the switching pipe is capable of rotating to enable the second end of the switching pipe to be in communication with any one of the at least one switchable flow path.

2. The flow path switching valve of claim 1, wherein the communication port further comprises a second connection port;
the flow path switching valve further comprises:
a power amplifying mechanism connected to the first end of the switching pipe; and
a driving mechanism configured for cooperation with the power amplifying mechanism for transmission, the driving mechanism is capable of driving the switching pipe to rotate by the power amplifying mechanism, such that the second end of the switching pipe is in communication with one of the at least one switchable flow path.

3. The flow path switching valve of claim 2, wherein the power amplifying mechanism comprises a fitting component, the fitting component is connected to the first end of the switching pipe, the driving mechanism comprises a transmission component, the transmission component is capable of applying a transmission force to the fitting component for cooperation transmission to cause the fitting component to rotate; and
wherein the transmission force consists of either or both of a circumferential force and a radial force.

4. The flow path switching valve of claim 3, wherein the fitting component is a first gear, the transmission component is a second gear, and the second gear is engaged and in transmission with the first gear.

5. The flow path switching valve of claims 2 or 4, wherein a support platform is provided on a sidewall of the valve body, the support platform is located on an end of the valve body towards the first connection port, the power amplifying mechanism is located on the support platform, and the support platform is configured to support the power amplifying mechanism and the switching pipe.

6. The flow path switching valve of claim 4, wherein the first gear is a segment gear.

7. The flow path switching valve of claim 3, wherein the driving mechanism further comprises a transmission shaft and a power component, one end of the transmission shaft is connected to the transmission component, the other end of the transmission shaft is connected to the power component, the power component is configured to drive the transmission shaft to rotate, and the transmission shaft is configured to drive the transmission component to rotate.

8. The flow path switching valve of claim 7, wherein the power component is located outside of the valve body; a connecting hole corresponding to the transmission shaft is defined on the valve body, an end of the transmission shaft extends out of the connecting hole and is connected to the power component; and/or
the valve body is internally provided with an accommodating cavity, the power component is provided in the accommodating cavity, the accommodating cavity is isolated from the valve cavity.

9. The flow path switching valve of claim 1, wherein the at least one switchable flow path comprises a first switchable flow path and a second switchable flow path, the switching pipe abuts against an inner wall of the valve body during rotating of the switching pipe; and
a first sealing component is provided between the first end of the switching pipe and the inner wall of the valve body and abuts against the inner wall of the valve body and the switching pipe, and/or, a second sealing component is provided between the second end of the switching pipe and the inner wall of the valve body and abuts against the inner wall of the valve body and the switching pipe.

10. The flow path switching valve of claim 9, wherein the first sealing component is disposed on the first end of the switching pipe, the second sealing component is disposed on the second end of the switching pipe;
a first sealing groove and a second sealing groove are defined on a pipe wall of two ends of the switching pipe, the first sealing component and the second sealing component are installed in the first sealing groove and the second sealing groove, respectively; and/or
a first sealing groove and a second sealing groove are provided on the inner wall of the valve body towards the two ends of the switching pipe, respectively, the first sealing component and the second sealing component are installed in the first sealing groove and the second sealing groove, respectively.

11. The flow path switching valve of claim 1, wherein the at least one switchable flow path comprises a first switchable flow path and a second switchable flow path;
a first passage is internally provided in the switching pipe, a second switchable flow path configured to be in communication with the first switchable flow path or the second switchable flow path is internally provided in the valve body, the second passage surrounds the first passage, and during rotating of the switching pipe, a surface of an end of the switching pipe away from the first connection port is in contact with the inner wall of the valve body.

12. The flow path switching valve of claim 11, wherein the first switchable flow path and the second switchable flow path are located at a same end of the valve body, and the first connection port is opposite to the first switchable flow path and the second switchable flow path.

13. The flow path switching valve of claim 11, wherein a bottom wall of the valve body is a plane, and the first switchable flow path and the second switchable flow path are located on the plane.

14. The flow path switching valve of claim 2, wherein the flow path switching valve further comprises a first rotatable component, the first rotatable component is sleeved on the first end of the switching pipe and located between the switching pipe and the inner wall of the valve cavity, such that the switching pipe is rotatably connected to the valve body by the first rotatable component.

15. The flow path switching valve of claim 9, wherein a rotatable portion isprovided on the second end of the switching pipe, the rotatable portion is connected to the inner wall of the valve body, and the switching pipe is capable of rotating around the rotatable portion and switching for being in communication with the first switchable flow path or the second switchable flow path.

16. The flow path switching valve of claim 15, wherein a second rotatable component is provided on the rotatable portion, an inner ring of the second rotatable component is sleeved on and connected to an outer wall of the rotatable portion, and an outer ring of the second rotatable component is connected to the inner wall of the valve body.

17. The flow path switching valve of claim 1, wherein the at least one of switchable flow path comprises a first switchable flow path and a second switchable flow path, the switching pipe is installed in the valve cavity; and
the flow path switching valve further comprises a plurality of connecting pipe assemblies, ends of the plurality of the connecting pipe assemblies are detachably connected to the first connection port, the first switchable flow path and the second switchable flow path, respectively.

18. The flow path switching valve of claim 17, wherein the flow path switching valve further comprises fasteners, and the plurality of connecting pipe assemblies comprises:
connecting pipes in communication with the communication port; and
connectors located outside of and connected to the connecting pipes,
wherein the fasteners penetrate through the connectors and are configured to connect the connectors with the valve body to install the connecting pipes on the valve body.

19. The flow path switching valve of claim 18, wherein the connecting pipes and the connectors are an integrated structure.

20. The flow path switching valve of claim 18, wherein ends of the plurality of connecting pipe assemblies towards the valve body are provided with second installing grooves, respectively, and the flow path switching valve further comprises:
third sealing components installed in the second installing grooves; and
wherein when the plurality of connecting pipe assemblies are fixed on the valve body by the fasteners, the third sealing components are capable of being compressed on the communication port.

21. The flow path switching valve of claim 20 , wherein the second installing grooves are disposed on side surfaces of the connectors towards the valve body; and/or
the second installing grooves are disposed on side surfaces of the connecting pipes towards the valve body.

22. The flow path switching valve of claim 20, wherein grooves are provided on the connectors, and the connecting pipes comprise:
steps located on ends of the connectors towards the valve body, the second installing grooves are defined on side surfaces of the steps towards the valve body,
wherein the connectors are sleeved on the connecting pipes, the grooves are capable of abutting against the steps.

23. The flow path switching valve of claim 18, wherein an end of one of the connecting pipes towards the valve body is connected to an end of one of the connectors towards the valve body by welding;
or an outer surface of an end of one of the connecting pipes towards the valve body is connected to an inner surface of one of the connecting pipes by welding.

24. The flow path switching valve of claim 18, wherein the connecting pipes are made of a copper or steel material; and/or
the connectors and the fasteners are made of aluminum alloy.

25. An air conditioner system, **characterized by** comprising the flow path switching valve of any one of claims 1 to 24.

26. The air conditioner system of claim 25, further comprising a compressor, a first heat exchanger and a second heat exchanger, a second connection port in communication with the valve cavity is defined on a side wall of the valve body; and
the first connection port and the second connection port are in communication with a suction port or an exhaust port of the compressor, respectively, and the first switchable flow path and the second switchable flow path are in communication with the first heat exchanger or the second heat exchanger.

27. The air conditioner system of claim 25, wherein on a condition that the air conditioner system is in a cooling mode or a defrosting mode, the switching pipe is in communication with the first switchable flow path, the second switchable flow path is in communication with the second connection port by the second passage; and on a condition that the air conditioner system is in a heating mode, the switching pipe is in communication with the second switchable flow path, the first switchable flow path is in communication with the second connection port by the second passage.
